# EUROPÄISCHE PATENTSCHRIFT

(11) **EP 3 056 745 B1**
(45) Veröffentlichungstag und Bekanntmachung des Hinweises auf die Patenterteilung: **10.07.2019**
(21) Anmeldenummer: 16155140.3
(22) Anmeldetag: 11.02.2016
(51) Int. Cl.: F04F 5/52

(54) **UNTERDRUCKERZEUGERVORRICHTUNG UND SCHLAUCHHEBER MIT EINER UNTERDRUCKERZEUGERVORRICHTUNG**
VACUUM GENERATOR DEVICE AND HOSE LIFTER WITH A VACUUM GENERATOR DEVICE
DISPOSITIF GENERATEUR DE DEPRESSION ET TUBE DE LEVAGE PAR ASPIRATION AVEC DISPOSITIF GENERATEUR DE DEPRESSION

(30) Priorität: 12.02.2015 DE 102015202603
(43) Veröffentlichungstag der Anmeldung: 17.08.2016
(73) Patentinhaber: J. Schmalz GmbH, 72293 Glatten (DE)
(72) Erfinder: KUOLT, Harald, 78586 Deilingen (DE); GAUß, Jan, 72250 Freudenstadt (DE)
(74) Vertreter: DREISS Patentanwälte PartG mbB

(56) Entgegenhaltungen:
- EP-A2- 1 213 485
- DE-B2- 1 503 706
- DE-C1- 10 119 938
- DE-T2- 69 717 426
- DE-U1- 9 208 045
- US-A- 4 315 717
- US-A- 5 277 468

## Beschreibung

Die Erfindung betrifft eine Unterdruckerzeugervorrichtung mit einem elektrisch angetriebenen primären Unterdruckerzeuger gemäß Anspruch 1, sowie einen Schlauchheber mit einer solchen Unterdruckerzeugervorrichtung gemäß Anspruch 10.

Die genannten Unterdruckerzeugervorrichtungen finden insbesondere Verwendung, wenn größere Volumenströme an eingesaugter Luft abgeführt werden müssen. Ein Beispiel ist die Handhabung von Gegenständen mit sogenannten Schlauchhebern. Diese ermöglichen eine Handhabung dadurch, dass der zu greifende Gegenstand mit einer an einem Hebeschlauch angeordneten Greifeinrichtung gehalten wird und der Hebeschlauch durch in ihm angelegten Unterdruck verkürzt wird. Daher müssen regelmäßig große Volumina aus dem Hebeschlauch evakuiert werden. Gleichzeitig ist es erwünscht, für die Sauggreifeinrichtung des Schlauchhebers einen ausreichend starken Unterdruck bereitzustellen, um ein sicheres Halten des Gegenstandes zu gewährleisten. Unterdruckerzeugervorrichtungen mit elektrisch angetriebenen Unterdruckerzeugern finden außerdem Verwendung in Anlagen, in welchen keine pneumatische Infrastruktur, wie beispielsweise Druckluftversorgung, zur Verfügung steht.

Bei elektrisch angetriebenen Unterdruckerzeugern kann das Unterdruckniveau in der Regel nur dadurch verbessert werden, dass höhere Drehzahlen (beispielsweise bei Unterdruckpumpen) oder eine verbesserte Abdichtung von Lüfterrädern bereitgestellt werden. Derartige Maßnahmen sind oft technisch aufwändig und teuer.

Andererseits sind sogenannte Ejektoren bekannt, welche mit Druckluft betrieben werden und nach dem Saugstrahlpumpenprinzip Unterdruck erzeugen. Ein Ejektor weist üblicherweise eine Strahldüse mit einer Eintrittsöffnung für die antreibende Druckluft sowie eine im Strömungspfad folgende Fangdüse mit einer Austrittsöffnung auf. Zwischen Strahldüse und Fangdüse ist eine Saugöffnung vorgesehen, an welcher aufgrund einer Strömung von Strahldüse zur Fangdüse ein Unterdruck abgreifbar ist. Zur Verbesserung des erzeugten Unterdrucks sind sogenannte Mehrstufenejektoren bekannt, bei welchen mehrere Ejektoren dadurch seriell geschaltet sind, dass die aus der Fangdüse des ersten Ejektors austretende Abluft als Treibgas zur Speisung der Strahldüse des nachgeordneten Ejektors wirkt. Eine weitere Art der Zusammenschaltung von Ejektoren zeigt die EP 1 213 485 A2. Hierbei sind in einer Vakuumerzeugervorrichtung zwei Ejektoren in einem Gehäuse kompakt verbaut. In dem Gehäuse ist ein Verbindungskanal ausgebildet, welcher intern eine Strömungsverbindung vom Sauganschluss des einen Ejektors zu der Austrittsöffnung an der Fangdüse des nachgeschalteten Ejektors herstellt. Insofern sind hier in einem Gehäuse mehrere Strahldüsen und Fangdüsen derart kombiniert, dass im Vergleich zu einem gewöhnlichen Ejektor erhöhte Energieeffizienz und/oder ein verbessertes Unterdruckniveau erzielt werden kann. Die gesamte Einrichtung ist mit Druckfluid angetrieben.

Bekannt sind auch Fluid-Ring-Pumpen, bei welchen Unterdruckerzeuger nach dem Saugstrahldüsenprinzip mittels eines Fluids betrieben werden, das durch eine Pumpe o.ö. in einem Kreislauf gepumpt wird, vgl. z.B. US 4315717 A und DE 1503706 A.

Die DE 697 17 426 T2 beschreibt eine pneumatische Hebevorrichtung mit als Saugnäpfen ausgebildeten Unterdruckhandhabungsvorrichtungen, welche von einer durch einen Elektromotor angetriebenen Vakuumpumpe mit Unterdruck versorgt werden.Die Saugnäpfe sind an einem Unterteil eines Hebeschlauches angeordnet.

Die Aufgabe der Erfindung besteht darin, bei Unterdruckhandhabungsvorrichtungen mit elektrischen Primärantrieb mittels eines einfachen und kostengünstigen Aufbaus das erreichbare Unterdruckniveau zu verbessern bzw. die Energieeffizienz zu erhöhen. Außerdem sollen vergleichsweise hohe Volumenströme für die abgesaugte Luft erzielt werden können.

Diese Aufgabe wird durch eine Unterdruckerzeugervorrichtung gemäß Anspruch 1 gelöst. Die Unterdruckerzeugervorrichtung weist einen elektrisch aktiv antreibbaren primären Unterdruckerzeuger mit einem Sauganschluss zum Absaugen einer Primärsaugströmung auf. Darüber hinaus ist wenigstens eine Ejektoreinrichtung vorgesehen, welche eine zur Umgebung offene Eintrittsöffnung, eine Austrittsöffnung sowie eine Saugöffnung aufweist, und bei welcher unter Ausnutzung des Saugstrahlpumpenprinzips an der Saugöffnung eine Saugwirkung hervorgerufen werden kann. Hierzu wird die Ejektoreinrichtung von einer Absaugströmung von der Eintrittsöffnung zur Austrittsöffnung durchströmt. Dabei ist der Sauganschluss des elektrisch angetriebenen primären Unterdruckerzeugers derart mit der Austrittsöffnung der Ejektoreinrichtung strömungsverbunden, dass durch Ansaugen der Primärströmung die Absaugströmung durch die Ejektoreinrichtung getrieben wird. Die Ejektoreinrichtung ist in einem Anschlusselement einer Unterdruckhandhabungsvorrichtung integriert, z.B. im Anschlussnippel eines Sauggreifers. Mehrere solcher Einheiten können an den gemeinsamen primären Unterdruckerzeuger angeschlossen sein.

Der primäre Unterdruckerzeuger ist ein nicht pneumatisch angetriebener Unterdruckerzeuger, vorzugsweise eine elektrisch angetriebene Unterdruckpumpe, ein Unterdruckgebläse oder ein Kompressor. Solche Einrichtungen zeichnen sich in der Regel dadurch aus, dass an ihrem Sauganschluss ein vergleichsweise großer Volumenstrom als Primärsaugströmung abgreifbar ist.

Die Saugöffnung der wenigstens einen Ejektoreinrichtung ist dann mit einem für die Verbindung mit z.B. einer Unterdruckhandhabungsvorrichtung oder einer Unterdruckspannvorrichtung vorgesehenen Nutzanschluss der Unterdruckerzeugervorrichtung verbunden.

Die Ejektoreinrichtung kann einen einfachen Aufbau aufweisen und umfasst vorzugsweise eine Strahldüse mit zugeordneter Eintrittsöffnung, sowie eine im Strömungspfad folgende Fangdüse, in welche die aus der Strahldüse austretende Absaugströmung eintritt und schließlich den Ejektor durch die Austrittsöffnung verlässt. Durch die Absaugströmung wird an der zwischen Strahldüse und Fangdüse vorgesehenen Saugöffnung ein Unterdruck erzeugt.

Hierbei ist es nicht notwendig, die Absaugströmung durch eine an der Eintrittsöffnung angelegte Druckversorgung aktiv zu betreiben. Vielmehr ist die Eintrittsöffnung zur Umgebung hin offen und daher mit Atmosphärendruck beaufschlagt. Es hat sich herausgestellt, dass das Absaugen an der Austrittsöffnung dazu führt, dass an der Saugöffnung der Ejektoreinrichtung ein gegenüber dem primären Unterdruck verbessertes Unterdruckniveau erzeugt werden kann. Dies erfolgt mit hoher Energieeffizienz und der vergleichsweise hohe, mit dem primären Unterdruckerzeuger erzielbare Volumenstrom bleibt nutzbar. Umgekehrt kann ein gewünschtes niedriges Unterdruckniveau mit technisch weniger aufwändigen und ggf. kleineren primären Unterdruckerzeugern erzielt werden.

Aufgrund des hohen, von dem primären Unterdruckerzeuger bereitstellbaren Volumenstromes können zur weiteren Verbesserung des Unterdruckniveaus mehrere Ejektoreinrichtungen parallel geschaltet werden. Die Ejektoreinrichtungen weisen jeweils eine Eintrittsöffnung, eine Austrittsöffnung und eine Saugöffnung auf und können dadurch parallel geschaltet werden, dass ihre Saugöffnungen mit einem gemeinsamen Nutzanschluss der Unterdruckerzeugervorrichtung verbunden sind. An dem Nutzanschluss kann im Betrieb der Vorrichtung der verbesserte Unterdruck abgegriffen werden. Insbesondere sind auch die jeweiligen Austrittsöffnungen gemeinsam mit dem Sauganschluss des primären Unterdruckerzeugers verbunden. Hierzu können die Austrittsöffnungen in einer Sammelleitung zusammengeführt werden, die mit dem Unterdruckerzeuger verbunden ist.

Der primäre Unterdruckerzeuger und die Ejektoreinrichtung sind vorzugsweise nicht in einem gemeinsamen Gehäuse angeordnet, sondern separat ausgebildet und ggf. durch Unterdruckleitungen miteinander verbunden. Insbesondere sind Unterdruckerzeuger und Ejektoreinrichtung als separate, beispielsweise modulare Baueinheiten ausgebildet und der Sauganschluss mittels einer Unterdruckleitung mit der Austrittsöffnung der Ejektoreinrichtung verbunden. Die Austrittsöffnung kann dann mit einem Anschluss einer Unterdruckhandhabungsvorrichtung oder -spannvorrichtung verbunden werden. Die genannte Ausgestaltung ermöglicht es, die Ejektoreinrichtung nahe bei der Unterdruckhandhabungsvorrichtung oder an dieser selbst anzuordnen. Im Betrieb der Vorrichtung strömt daher durch die Unterdruckleitung lediglich die Primärströmung und es liegt in der Unterdruckleitung lediglich das Unterdruckniveau des primären Unterdruckerzeugers an. Erst dort, wo tatsächlich erhöhter Unterdruck (d.h. niedrigerer Druck) benötigt wird, also nahe bei der Unterdruckhandhabungsvorrichtung, liegt das durch die Ejektoreinrichtung verbesserte Unterdruckniveau an. Das Gesamtsystem und insbesondere die Unterdruckleitungen müssen daher nur geringere Anforderungen an Dichtheit und Materialqualität erfüllen. Auch können Verluste durch Leckage minimiert und die Lebensdauer des Systems erhöht werden.

Denkbar ist auch, die Ejektoreinrichtung in der Art eines Zwischenschaltadapters auszugestalten. Hierzu kann die Ejektoreinrichtung in einem Adaptergehäuse verbaut sein, welches beispielsweise kapselartig oder im Wesentlichen zylindrisch ausgestaltet ist. Das Adaptergehäuse weist vorzugsweise einerseits einen Primärsauganschluss zur Verbindung mit dem primären Unterdruckerzeuger und einen entgegengesetzt angeordneten Nutzanschluss zum Abgriff des nutzbaren Unterdrucks auf. Zwischen Primärsauganschluss und Nutzanschluss erstreckt sich in dem Adaptergehäuse vorzugsweise axial ein Hauptsaugkanal, wobei mehrere Ejektoreinrichtungen der beschriebenen Art um den Hauptsaugkanal herum in dem Adaptergehäuse angeordnet sind. Dabei ist jeweils die Austrittsöffnung mit dem Primärsauganschluss verbunden oder mündet in den Hauptsaugkanal. Die Saugöffnungen münden in den Nutzanschluss des Adaptergehäuses. Der Primärsauganschluss und der Nutzanschluss des Adaptergehäuses können durch entgegengesetzt angeordnete Anschlussstutzen ausgebildet sein. Ein solches Adaptergehäuse kann dann in der Art eines Zwischenschaltadapters in eine Leitungsverbindung zwischen Unterdruckerzeuger und einer Handhabungsvorrichtung zwischengeschaltet werden. Dadurch ist es auf einfache Weise möglich, eine bestehende Unterdruckhandhabungsanlage durch Zwischenschaltung des Adaptergehäuses auf ein verbessertes Vakuumniveau aufzurüsten. Die umgebungsoffenen Einlassöffnungen der Ejektoren können z.B. um den Nutzanschluss herum verteilt im Adaptergehäuse angeordnet sein.

Zur weiteren Ausgestaltung ist es vorteilhaft, wenn die Strömungsverbindung durch den zentralen Hauptsaugkanal mittels einer Ventileinrichtung (z.B. Rückschlagventil) verschließbar ist. Die Ventileinrichtung schaltet insbesondere druckabhängig. Sie kann z.B. den direkten Durchgang von Primärsauganschluss zum Nutzanschluss bei Unterschreiten eines Zielunterdrucks im Bereich des Nutzanschlusses verschließen, so dass dann die Bereitstellung von verbessertem Unterdruck nur durch die Ejektoreinrichtungen erfolgt.

Unabhängig von der konkreten Ausgestaltung kann der Saugöffnung der Ejektoreinrichtung ein Rückschlagventil zugeordnet sein. Dieses ist insbesondere in Bezug auf eine eingesaugte Strömung vorgeschaltet. Das Rückschlagventil verschließt in seiner Schließstellung die Saugöffnung und unterbindet weiteres Einsaugen. Dies ermöglicht es, bei Erreichen eines Zielunterdrucks zur Energieeinsparung den primären Unterdruckerzeuger z.B. abzuschalten oder herunterzuregeln. Dies ist z.B. sinnvoll, wenn eine mit der Unterdruckerzeugervorrichtung betriebene Sauggreifvorrichtung dichtend an einem Werkstück anliegt und das Haltevakuum stabil bleibt. Das Rückschlagventil verhindert dann, dass das Haltevakuum dadurch abgebaut wird, dass Luft durch den Ejektor zurückströmt.

Zur weiteren Ausgestaltung kann nutzanschlussseitig, d.h. auf der der Ejektoreinrichtung abgewandten Seite des Rückschlagventils, ein Drucksensor vorgesehen sein. Mit diesem kann der aufgebaute Unterdruck überwacht werden. Der Drucksensor ist insbesondere mit einer Steuereinrichtung für den primären Unterdruckerzeuger verbunden, welche den Unterdruckerzeuger in Abhängigkeit der gemessenen Druckdaten ansteuert. Insbesondere wird der Unterdruckerzeuger aktiviert, wenn der gemessene Druck über einen kritischen Wert ansteigt und daher das Vakuum nachgebessert werden muss.

Grundsätzlich ist denkbar, dass bei Erreichen des Zielvakuums die Eintrittsöffnung verschlossen wird. Dadurch kann vermieden werden, dass die aus der Austrittsöffnung austretende Absaugströmung des Ejektors den primären Unterdruckerzeuger auch nach Erreichen eines Zielvakuums unnötig weiter belastet. Hierzu ist denkbar, dass der umgebungsoffenen Eintrittsöffnung ein steuerbares Ventil zugeordnet ist, insbesondere bezüglich der eintretenden Strömung vorgeschaltet ist. Das Ventil kann z.B. derart ausgestaltet sein, dass es in seiner Schließstellung die Eintrittsöffnung verschließt und ein Einströmen in die Eintrittsöffnung unterbindet.
Zur weiteren Ausgestaltung kann ein Drucksensor zur Messung des Unterdrucks an der Saugöffnung der Ejektoreinrichtung vorgesehen sein, wobei das der Eintrittsöffnung zugeordnete, steuerbare Ventil in Abhängigkeit der Messwerte für den Unterdruck ansteuerbar ist. Insbesondere erfolgt eine Ansteuerung derart, dass bei Unterschreiten eines Zielunterdrucks das Ventil geschlossen wird. Dadurch wird eine unnötige Belastung des primären Unterdruckerzeugers durch die eingesaugte Umgebungsluft vermieden.

Vorzugsweise ist ein Bypass zur Strömungsverbindung des Sauganschlusses mit dem Nutzanschluss derart vorgesehen, dass die Ejektoreinrichtung überbrückt werden kann. Der Bypass mündet vorzugsweise einerseits in eine Verbindung zwischen der Austrittsöffnung der Ejektoreinrichtung und dem Sauganschluss des primären Unterdruckerzeugers ein, und mündet andererseits in eine Verbindung zwischen der Saugöffnung der Ejektoreinrichtung und dem Nutzanschluss ein. Durch den Bypass können bei Bedarf große Volumenströme mit dem primären Unterdruckerzeuger direkt vom Nutzanschluss abgesaugt werden. Um den Bypass bedarfsabhängig zu verschließen, ist in dem Bypass vorzugsweise eine Ventileinrichtung vorgesehen. Die Ventileinrichtung kann eine Schließstellung einnehmen, in welcher eine Strömung durch den Bypass unterbunden ist.

Die Ventileinrichtung kann z.B. als Rückschlagventil ausgebildet sein. Vorteilhaft ist auch eine Ausgestaltung als steuerbares Ventil, welches in Abhängigkeit von gemessenen Unterdruckwerden für den an dem Nutzanschluss anstehenden Unterdruck angesteuert wird. Hierzu kann ein Drucksensor zur Messung des an dem Nutzanschluss anstehenden Unterdruckes vorgesehen sein. Der Drucksensor kann z.B. den Druck in dem Nutzanschluss oder in einer zum Nutzanschluss führenden Unterdruckleitung messen.

Der Volumenstrom durch übliche Ejektoren ist oft baubedingt begrenzt. Durch geeignete Anordnung kann die Wirkung mehrerer Ejektoren auf kompakte Weise mittels einer Parallelschaltung kombiniert werden. Hierzu kann vorgesehen sein, dass mehrere Ejektoreinrichtungen (mit jeweils Eintrittsöffnung, Saugöffnung und Austrittsöffnung) in einer gemeinsamen Ejektorkonsole angeordnet sind, welche einen sich in der Ejektorkonsole (z.B. geradlinig) erstreckenden Absaugkanal aufweist. Der Absaugkanal mündet in einen Primäranschluss zur Verbindung mit dem primären Unterdruckerzeuger. Die Ejektoreinrichtungen sind derart entlang des Absaugkanals angeordnet, dass die Austrittsöffnungen nacheinander entlang des Absaugkanals in diesen einmünden. Insbesondere können die Ejektoreinrichtungen als stabartige Ejektorpatronen mit endständigen Austrittsöffnungen ausgebildet sein, wobei die Ejektorkonsole eine Mehrzahl nebeneinander verlaufender und vorzugsweise senkrecht in den Absaugkanal einmündender Aufnahmebuchsen für diese Ejektorpatronen aufweist. Zusätzlich verläuft in der Ejektorkonsole vorzugsweise auch ein Sammelkanal, in welchen die Saugöffnungen der Ejektorpatronen einmünden. Der Sammelkanal kann dann in einen Nutzanschluss der Ejektorkonsole einmünden, über welchen die Verbindung zu beispielsweise einer Unterdruckhandhabungsvorrichtung erfolgt.

Die beschriebenen Unterdruckerzeugervorrichtungen lösen die eingangs genannte Aufgabe in besonders vorteilhafter Weise in einem sogenannten Schlauchheber. Hierbei handelt es sich um Unterdruck-Hebegeräte, wie sie beispielsweise aus der DE 92 08 045 U1 bekannt sind. Schlauchheber finden zum Handhaben z.B. zum Ergreifen, Anheben und Bewegen von Gegenständen Anwendung und weisen einen Hubschlauch auf, der durch einen in ihm anliegenden Unterdruck verkürzbar ist. Der aufgenommene Gegenstand wird mittels eines Sauggreifers angesaugt. Die Handhabung des Gegenstandes wird durch die unterdruckbedingte Verkürzung des Hebeschlauches unterstützt. Ein solcher Schlauchheber ist vorzugsweise mit einer Unterdruckerzeugervorrichtung der beschriebenen Art ausgestattet.

Dabei erfolgt die Evakuierung des Hebeschlauches vorzugsweise durch den primären Unterdruckerzeuger. Hierbei können große Volumenströme auftreten, und prinzipbedingt in vorteilhafter Weise mit dem primären Unterdruckerzeuger abgeführt werden. Der primäre Unterdruckerzeuger kann z.B. im Bereich des von der Unterdruckgreifeinrichtung abgewandten Endes des Hebeschlauches, z.B. an einem Tragegerüst des Schlauchhebers, angeordnet sein. Die Ejektoreinrichtung kann z.B. im Bereich der Unterdruckgreifeinrichtung oder an dieser selbst angeordnet sein. Somit wird der Unterdruck erst dort erhöht, wo er zum Halten des Gegenstandes benötigt wird. Bei diesem Schlauchheber ist daher die Haltekraft erhöht und die Greifsicherheit verbessert. Die erfindungsgemäßen Vorteile, insbesondere die Kombination von hohem nutzbarem Volumenstrom und verbessertem Unterdruckniveau äußern sich daher in besonders vorteilhafter Weise bei der Verwendung der Unterdruckerzeugervorrichtung in einem Schlauchheber.

Die Erfindung wird im Folgenden weiter anhand der Figuren beschrieben.

Es zeigen:
- Figur 1: Schaltbild einer ersten Ausführungsform einer Unterdruckerzeugervorrichtung;
- Figuren 2a und 2b: Schaltbilder weiter Ausgestaltungen für die Unterdruckerzeugervorrichtungen;
- Figur 3: Beispiel für die Integration der Ejektoreinrichtung in einen Anschlussnippel;
- Figur 4: Ejektorkonsole mit mehreren integrierten Ejektoreinrichtungen;
- Figur 5: Beispiel für eine als Zwischenschaltadapter ausgebildete Ejektoreinrichtung;
- Figur 6: Längsschnittdarstellung zu Figur 5; und
- Figur 7:: Skizzierte Darstellung zur Erläuterung eines erfindungsgemäßen Schlauchhebers.

In der nachfolgenden Beschreibung sowie in den Figuren sind für identische oder einander entsprechende Merkmale jeweils dieselben Bezugszeichen verwendet.

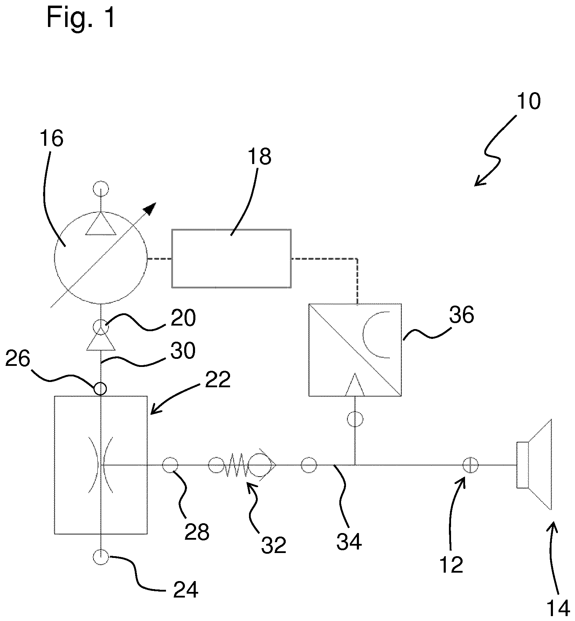

Die Figur 1 zeigt schematisch ein Schaltbild einer Unterdruckerzeugervorrichtung 10, die über ihren Nutzanschluss 12 mit einer Unterdruckhandhabungsvorrichtung (hier Sauggreifer 14) verbunden ist und diesen mit Unterdruck versorgt. Ein primärer Unterdruckerzeuger 16 ist im dargestellten Beispiel als elektrisch angetriebene Unterdruckpumpe ausgebildet. Zur Ansteuerung des primären Unterdruckerzeugers kann eine Steuereinrichtung 18 vorgesehen sein, mittels welcher z.B. die Drehzahl des Unterdruckerzeugers 16 und/oder seine Aktivierung bzw. Deaktivierung gesteuert werden kann.

Der Unterdruckerzeuger 16 weist einen Sauganschluss 20 auf, durch den eine Primärsaugströmung einsaugbar ist. Die Primärsaugströmung treibt eine Ejektoreinrichtung 22 an. Diese weist eine Eintrittsöffnung 24 und eine Austrittsöffnung 26 auf. Die Austrittsöffnung 26 ist insofern umgebungsoffen, als Umgebungsluft durch sie in den Ejektor 22 einströmen kann (sofern nicht ein kontrolliertes Verschließen erfolgt, s.u.). Die Ejektoreinrichtung 22 weist außerdem eine Saugöffnung 28 auf, in welcher nach dem Saugstrahlpumpenprinzip durch eine sich von der Eintrittsöffnung 24 zu der Austrittsöffnung 26 einstellenden Absaugströmung ein Unterdruck bereitgestellt werden kann. Die Absaugströmung wird dadurch getrieben, dass mittels des primären Unterdruckerzeugers 16 an der Austrittsöffnung 26 der Ejektoreinrichtung gesaugt wird und dadurch Luft aus der Umgebung durch die Eintrittsöffnung 24 in die Ejektoreinrichtung 22 eingesaugt wird.

Grundsätzlich können der primäre Unterdruckerzeuger 16 und die Ejektoreinrichtung 22 voneinander beabstandet als separate Baueinheiten ausgestaltet sein. Insofern kann die Verbindung zwischen Sauganschluss 20 und Austrittsöffnung 26 mittels einer Unterdruckleitung 30 erfolgen. Diese Ausgestaltung ist jedoch nicht zwingend.

Der Saugöffnung 28 der Ejektoreinrichtung 22 ist ein Rückschlagventil 32 zugeordnet. Dieses ist im dargestellten Beispiel in einer Unterdruckleitung 34 zwischengeschaltet, welche die Saugöffnung 28 mit dem Nutzanschluss 12 bzw. mit der Unterdruckhandhabungsvorrichtung 14 verbindet. Das Rückschlagventil unterbricht in seiner Schließstellung die Strömungsverbindung zwischen Saugöffnung 28 und Nutzanschluss 12 bzw. Unterdruckhandhabungsvorrichtung 14. Insbesondere nimmt das Rückschlagventil 32 seine Schließstellung ein, wenn auf Seiten des Nutzanschlusses 12 ein ausreichend hohes Vakuum vorliegt, z.B. um den Sauggreifer 14 sicher betreiben zu können. In diesem Fall kann zur Energieeinsparung der primäre Unterdruckerzeuger 16 deaktiviert oder zumindest heruntergeregelt werden. Die Steuereinrichtung 18 steht hierzu insbesondere mit einem Drucksensor 36 in Verbindung, der den im Nutzanschluss 12 oder im dargestellten Beispiel in der Unterdruckleitung 34 herrschenden Unterdruck misst. Die Steuereinrichtung 18 steuert den Unterdruckerzeuger 16 vorzugsweise in Abhängigkeit der gemessenen Druckwerte an.

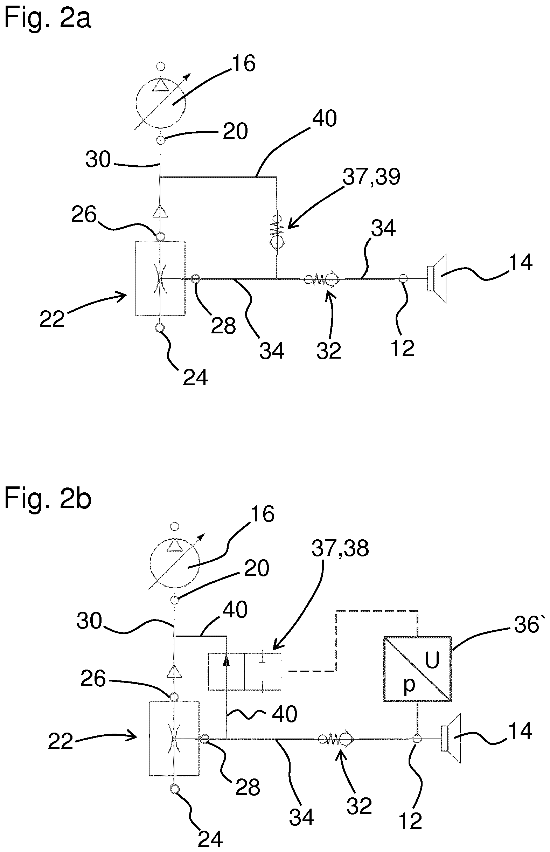

Die Figuren 2a und 2b zeigen weitere Ausgestaltungen als Schaltbild. Hierbei ist ein Bypass 40 vorgesehen, mit welchem die die Ejektoreinrichtung 22 überbrückt werden kann. Der Bypass 40 ist derart angeordnet, dass eine Strömungsverbindung zwischen dem Sauganschluss 20 und dem Nutzanschluss 12 unter Umgehung der Ejektoreinrichtung 22 hergestellt werden kann. Im dargestellten Beispiel mündet der Bypass 40 einerseits zwischen Sauganschluss 20 und Austrittsöffnung 26 in die Unterdruckleitung 30, andererseits zwischen Nutzanschluss 12 und Saugöffnung 28 in die Unterdruckleitung 34.

Um den Bypass 40 zu verschließen, ist in dem Bypass 40 eine Ventileinrichtung 37 vorgesehen. Nimmt diese eine Schließstellung ein, so wird ein Durchströmen durch den Bypass 40 unterbunden. Nimmt die Ventileinrichtung 37 eine Offenstellung ein, so kann der primäre Unterdruckerzeuger 16 direkt von dem Nutzanschluss 12 absaugen. Vorzugsweise wird der Bypass 40 geöffnet, wenn hohe Volumenströme durch den Nutzanschluss 12 abgesaugt werden sollen und vergleichsweise geringe Anforderungen an das erreichte Unterdruckniveau gestellt werden. Dies kann z.B. zu Beginn eines Ansaugvorgangs zum Greifen eines Werkstückes mit der Unterdruckhandhabungsvorrichtung 14 erwünscht sein.

Wie in Figur 2a gezeigt, kann die Ventileinrichtung 37 als Rückschlagventil 39 ausgebildet sein. Dieses ist vorzugsweise in Richtung seiner Schließstellung vorgespannt.

Nutzanschlussseitig, insbesondere zwischen Einmündung des Bypasses 40 in die Unterdruckleitung 34 und dem Nutzanschluss 12, kann wiederum optional ein Rückschlagventil 32 vorgesehen sein, welches in seiner Schließstellung die Strömungsverbindung zu dem Nutzanschluss 12 bzw. zu der Unterdruckhandhabungsvorrichtung 14 unterbricht (vgl. Fig. 1). Insbesondere nimmt das Rückschlagventil 32 seine Schließstellung ein, wenn auf Seiten des Nutzanschlusses 12 ein ausreichend hohes Vakuum vorliegt.

Wie in Figur 2b dargestellt, kann die Ventileinrichtung 37 als steuerbares Ventil 38 ausgebildet sein. Um eine Steuerung des Ventils 38 in Abhängigkeit des Drucks am Nutzanschluss 12 vorzunehmen, misst ein Drucksensor 36' den nutzseitigen Unterdruck. Der Drucksensor 36' ist mit dem steuerbaren Ventil 38 über eine Schaltleitung verbunden und steuert das steuerbare Ventil 38. Beispielsweise kann der Drucksensor 36' als Differenzdruckmesser ausgebildet sein, welcher bei einem Schwellwert für den Unterdruck in eine Schaltstellung verlagert wird, die ein Verschließen des Ventils 38 bewirkt.

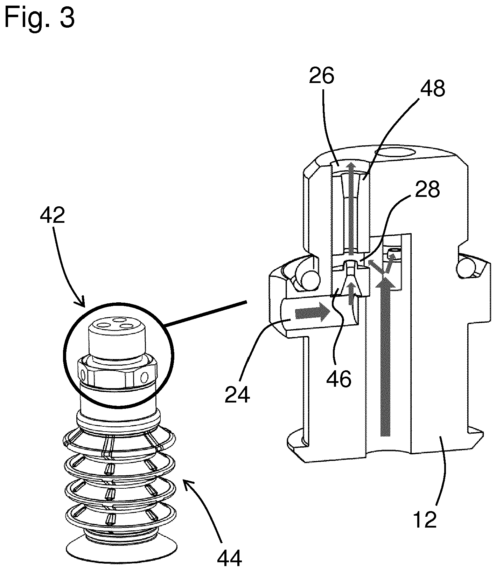

In den Figuren 3 bis 6 sind verschiedene Ausgestaltungen für die Ejektoreinrichtungen 22 gezeigt. Hinsichtlich der weiteren Bauteile wie z.B. primärer Unterdruckerzeugers oder Ventile und Sensoren usw. wird auf die Figuren 1 und 2 verwiesen.

Bei der Figur 3 ist die Ejektoreinrichtung 22 in einen Anschlussnippel 42 eines Sauggreifers 44 in der Form eines Faltenbalgsaugers integriert. Wie in der Schnittdarstellung erkennbar, mündet die Eintrittsöffnung 24 in einem radial außen liegenden Bereich des Anschlussnippels 42 in die Umgebung. Die Eintrittsöffnung 24 erstreckt sich zu einer in dem Anschlussnippel 42 ausgebildeten Treibdüse 46, in welcher die einströmende Luft beschleunigt wird. Die so erzeugte Absaugströmung wird von einer Fangdüse 48 aufgenommen, die in die Austrittsöffnung 26 des Anschlussnippels 42 mündet. An die Austrittsöffnung 26 kann dann die Verbindung zu dem primären Unterdruckerzeuger angeschlossen werden. Eine zwischen Treibdüse 46 und Fangdüse 48 ausgebildete Saugöffnung steht mit einer zentralen Bohrung des Anschlussnippels 42 in Verbindung, welche den Nutzanschluss 12 bildet und in den Sauggreifer 44 einmündet. Hierzu weist die den Nutzanschluss 12 bereitstellende Axialbohrung des Anschlussnippels 42 einen radialen Durchbruch zu der Saugöffnung 28 auf. Grundsätzlich ist es möglich, mehrere Ejektoreinrichtungen (d.h. Kombinationen von Treibdüsen 46 und Fangdüsen 48) um die Zentralbohrung (Nutzanschluss 12) herum in dem Anschlussnippel 42 bereitzustellen.

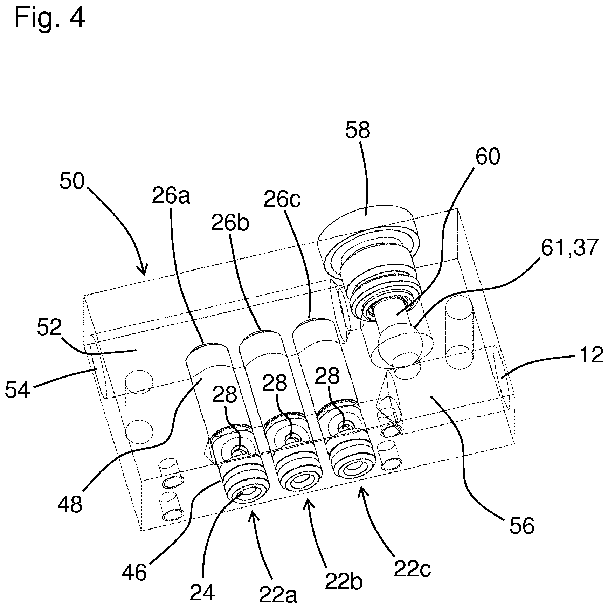

Die Figur 4 zeigt die Parallelschaltung mehrerer Ejektoreinrichtungen 22a, 22b, 22c in einer gemeinsamen Ejektorkonsole 50. In der Ejektorkonsole 50 erstreckt sich ein Absaugkanal 52, der in einem Primäranschluss 54 der Konsole mündet. Über diesen kann die Konsole 50 mit einem primären Unterdruckerzeuger 16 (vgl. Figuren 1 und 2) verbunden werden. Entlang der Erstreckung des Absaugkanals 52 münden die Austrittsöffnungen 26a, 26b, 26c der Ejektoreinrichtungen in den Absaugkanal 52 sequentiell ein. Hierzu können, wie im dargestellten Beispiel angedeutet, in der Ejektorkonsole 50 mehrere Aufnahmebuchsen eingebracht sein, welche entlang der Erstreckung des Absaugkanals 52 nacheinander in diesen einmünden. In die Aufnahmebuchsen sind im dargestellten Beispiel patronenartige Ejektoren mit jeweils Treibdüse 46 (aufweisend die jeweilige Eintrittsöffnung 34) und Fangdüse 48 (aufweisend die jeweilige Austrittsöffnung 26) eingebracht. Die Saugöffnungen 28 der verschiedenen Ejektoren sind über einen in der Ejektorkonsole 50 verlaufenden Sammelkanal 56 miteinander verbunden und münden in den Nutzanschluss 12. Im dargestellten Beispiel weist die Ejektorkonsole 50 ferner einen Druckabgriff 58 auf, an welchem beispielsweise eine Unterdruckmessung erfolgen kann, oder über welchen den Ejektoreinrichtungen ein Abblasimpuls zugeführt werden kann. Ferner ist ein Bypass-Kanal 60 in der Ejektorkonsole 50 ausgebildet, welcher einen Bypass 40 bildet. Der Bypass-Kanal 60 verbindet den Absaugkanal 52 mit dem Sammelkanal 56 und erlaubt somit eine Überbrückung der Ejektoreinrichtungen 22a bis 22c. Um den Bypass-Kanal 60 zu verschließen, ist in diesem ein Rückschlagventil 61 (Ventileinrichtung 37) angeordnet. Insbesondere wird der Bypass-Kanal 60 geöffnet, wenn hohe Volumenströme durch den Nutzanschluss 12 abgesaugt werden sollen und nur geringe Anforderungen an das erreichte Unterdruckniveau gestellt werden.

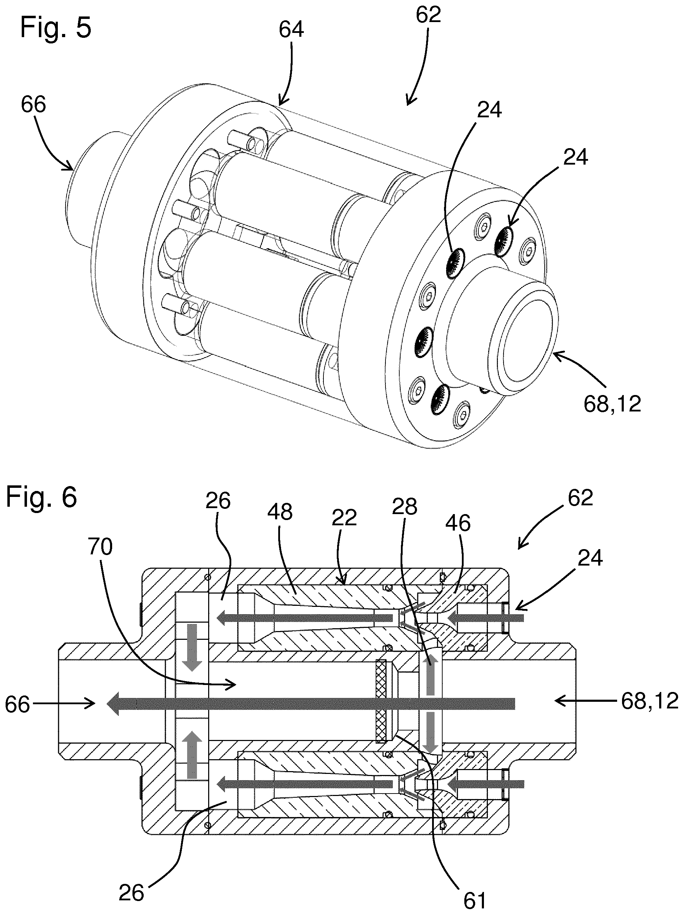

Anhand der Figuren 5 und 6 wird eine Ejektoreinrichtungen 22 in der Art eines Zwischenschaltadapters 62 beschrieben. Dieser weist ein Adaptergehäuse 64 auf, welches im dargestellten Beispiel kapselartig mit im Wesentlichen zylindrischer Form ausgestaltet ist. Das Adaptergehäuse 64 weist einen Anschlussstutzen 66 (Primärsauganschluss) zur Verbindung mit dem primären Unterdruckerzeuger 16 und einen axial gegenüberliegenden Anschlussstutzen 68 (Nutzanschluss 12) auf.

Durch das Adaptergehäuse 64 erstreckt sich zwischen Primärsauganschluss 66 und Nutzanschluss 68 ein axialer Hauptsaugkanal 70. Die direkte Verbindung zwischen Primärsauganschluss 66 und Nutzanschluss 68 ist wiederum mittels eines Rückschlagventils 61 verschließbar. Um den Hauptsaugkanal 70 herum sind mehrere Ejektoreinrichtungen 22 verteilt angeordnet. Diese weisen wiederum eine Treibdüse 46 mit umgebungsoffener Eintrittsöffnung 24 auf. Im dargestellten Beispiel sind die Eintrittsöffnungen 24 der verschiedenen Ejektoreinrichtungen 22 um den Nutzanschluss 68 (bzw. 12) herum verteilt angeordnet. Der Treibdüse nachgeschaltet ist wiederum eine Fangdüse 48, deren Austrittsöffnung 26 im Bereich des Primärsauganschlusses 66 in den Hauptsaugkanal 70 mündet. Die zwischen Treibdüse 46 und Fangdüse 48 vorgesehene Saugöffnung 28 der Ejektoreinrichtung 22 mündet im Bereich des Nutzanschlusses 68 bzw. 12 in den Hauptsaugkanal 70. Das Rückschlagventil 61 ist derart im Hauptsaugkanal 70 angeordnet, dass bei ausreichendem Unterdruckniveau in dem Nutzanschluss 68 die direkte Strömungsverbindung zu dem Primärsauganschluss 66 durch den Hauptsaugkanal 70 unterbrochen wird und ein Absaugen nur noch durch die Saugöffnungen 28 der Ejektoreinrichtungen 22 erfolgt.

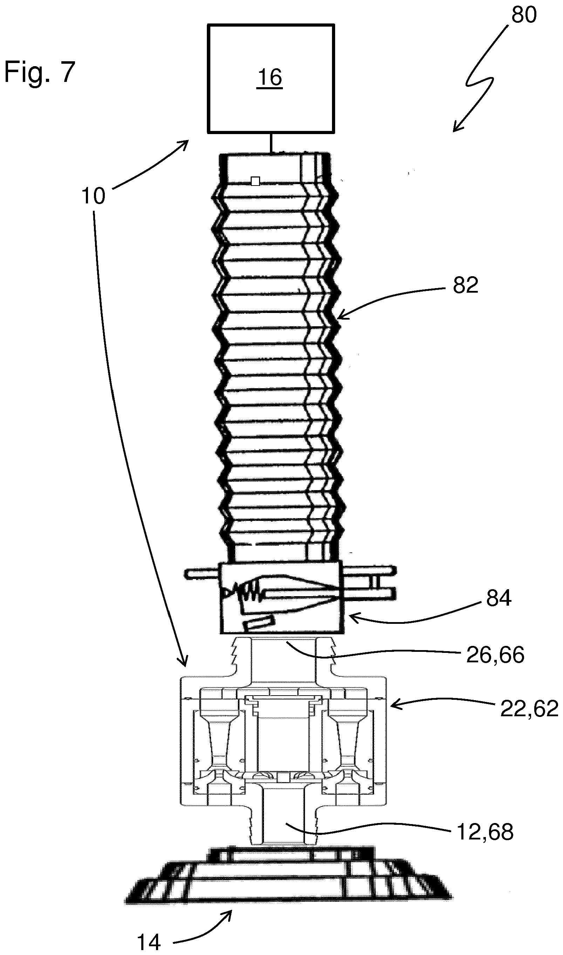

Die Figur 7 zeigt in skizzierter Darstellung einen Schlauchheber 80, welcher mit einer erfindungsgemäßen Unterdruckerzeugervorrichtung 10 ausgestattet ist. Im dargestellten Beispiel umfasst die Unterdruckerzeugervorrichtung 10 einen primären Unterdruckerzeuger 16 (z.B. elektrisch angetriebene Unterdruckpumpe) sowie eine Ejektoreinrichtung 22, die als Zwischenschaltadapter 62 (vgl. Figur 5) ausgestaltet ist. Der Schlauchheber 80 umfasst einen Hebeschlauch 82 mit einer an seinem freien Ende angeordneten Unterdruckhandhabungseinrichtung 14 (hier: Sauggreifer). Der Hebeschlauch 82 ist durch Anlegen eines Unterdrucks kontrolliert verkürzbar, um einen mit der Unterdruckhandhabungseinrichtung 14 gegriffenen Gegenstand kontrolliert anheben zu können. Durch Belüften kann sich der Hebeschlauch 82 wieder verlängern (Ablegen des Gegenstandes). Zum kontrollierten Verkürzen und Belüften des Hebeschlauches 82 ist eine Steuervorrichtung 84 vorgesehen, die in Figur 7 nur skizziert ist und entsprechende Steuerventile und/oder Entlüftungsventile umfassen kann. Im dargestellten Beispiel erfolgt die Evakuierung des Hebeschlauchs 82 im Wesentlichen mit dem primären Unterdruckerzeuger 16. Dieser kann z.B. an einem der Unterdruckhandhabungseinrichtung 14 abgewandten Ende des Hebeschlauchs 82 angeordnet sein, beispielsweise an einem Tragegerüst des Schlauchhebers 80. Die Ejektoreinrichtung 22 ist im Bereich der Unterdruckhandhabungseinrichtung 14 angeordnet und mit ihrem Nutzanschluss 12 mit der Greifvorrichtung 14 verbunden. So steht das durch die Ejektoreinrichtung 22 verbesserte Unterdruckniveau für die Greifvorrichtung 14 zur Verfügung. Die Austrittsöffnung 26 bzw. der Primärsauganschluss 66 ist über den Hebeschlauch 82 mit dem primären Unterdruckerzeuger 16 verbunden.

## Patentansprüche

1. Unterdruckerzeugervorrichtung (10) mit einem elektrisch angetriebenen primären Unterdruckerzeuger (16) mit einem Sauganschluss (20) zum Ansaugen einer Primärsaugströmung, und mit wenigstens einer Ejektoreinrichtung (22), welche eine zur Umgebung offene Eintrittsöffnung (24), eine Austrittsöffnung (26) und eine Saugöffnung (28) aufweist und von einer eine Saugwirkung an der Saugöffnung (28) hervorrufenden Absaugströmung von der Eintrittsöffnung (24) zur Austrittsöffnung (26) durchströmbar ist, wobei der Sauganschluss (20) des elektrisch angetriebenen primären Unterdruckerzeugers (16) mit der Austrittsöffnung (26) der Ejektoreinrichtung (22) strömungsverbunden ist, wobei die wenigstens eine Ejektoreinrichtung (22) in ein Anschlusselement (42) einer Unterdruckhandhabungseinrichtung (14) integriert ist.

2. Unterdruckerzeugervorrichtung (10) nach Anspruch 1, **dadurch gekennzeichnet, dass** mehrere Ejektoreinrichtungen (22a-22c) dadurch parallel geschaltet sind, dass ihre Saugöffnungen (28) mit einem gemeinsamen Nutzanschluss (12) der Unterdruckerzeugervorrichtung (10) verbunden sind.

3. Unterdruckerzeugervorrichtung (10) nach einem der vorherigen Ansprüche, **dadurch gekennzeichnet, dass** der primäre Unterdruckerzeuger (16) und die Ejektoreinrichtung (22) als separate Baueinheiten ausgebildet sind und der Sauganschluss mittels einer Unterdruckleitung (30), insbesondere einem Unterdruckschlauch, mit der Ausstrittsöffnung (26) der Ejektoreinrichtung (22) verbunden ist.

4. Unterdruckerzeugervorrichtung (10) nach einem der vorherigen Ansprüche, **dadurch gekennzeichnet, dass** die Ejektoreinrichtung (22) in einen Anschlussnippel (42) eines Sauggreifers (44) integriert ist.

5. Unterdruckerzeugervorrichtung (10) nach einem der vorherigen Ansprüche, **dadurch gekennzeichnet, dass** zur Aufnahme der Ejektoreinrichtungen (22) ein Adaptergehäuse (64) vorgesehen ist, welches einerseits einen Primärsauganschluss (66) zur Verbindung mit dem primären Unterdruckerzeuger (16) und einen entgegengesetzt angeordneten Nutzanschluss (68, 12) aufweist, wobei ein zentraler Hauptsaugkanal (70) zwischen dem Primärsauganschluss (66) und dem Nutzanschluss (68, 12) verläuft, und wobei mehrere Ejektoreinrichtungen (22) um den Hauptsaugkanal (70) herum angeordnet sind, wobei jeweils die Austrittsöffnungen (26) mit dem Primärsauganschluss (66) und die Saugöffnungen (28) mit dem Nutzanschluss (68, 12) verbunden sind.

6. Unterdruckerzeugervorrichtung (10) nach einem der vorherigen Ansprüche, **dadurch gekennzeichnet, dass** der Saugöffnung (28) der Ejektoreinrichtung (22) ein Rückschlagventil (32) zugeordnet ist, welches in seiner Schließstellung ein Einsaugen in die Saugöffnung (28) unterbindet.

7. Unterdruckerzeugervorrichtung (10) nach einem der vorherigen Ansprüche, **dadurch gekennzeichnet, dass** ein Bypass (40, 60) zur Strömungsverbindung des Sauganschlusses (20) mit einem Nutzanschluss (12) der Unterdruckerzeugervorrichtung (10) unter Umgehung der Ejektoreinrichtung (22) vorgesehen ist, wobei eine Ventileinrichtung (37; 38, 39, 61) zum Verschließen des Bypasses (40, 60) vorgesehen ist.

8. Unterdruckerzeugervorrichtung (10) nach dem vorherigen Anspruch, **dadurch gekennzeichnet, dass** ein Drucksensor (36') zur Messung des an dem Nutzanschluss vorliegenden Unterdrucks vorgesehen ist, und dass die Ventileinrichtung (37) als ein in Abhängigkeit der Messwerte für den Unterdruck ansteuerbares Ventil (38) ausgebildet ist.

9. Unterdruckerzeugervorrichtung (10) nach einem der vorherigen Ansprüche, **dadurch gekennzeichnet, dass** mehrere Ejektoreinrichtungen (22a-22c) in einer gemeinsamen Ejektorkonsole (50) angeordnet sind, welche einen sich in der Ejektorkonsole (50) erstreckenden Absaugkanal (52) aufweist, der in einen Primäranschluss (54) zur Verbindung mit dem primären Unterdruckerzeuger (16) mündet, wobei die Ejektoreinrichtungen (22a-22c) derart entlang des Absaugkanals (52) angeordnet sind, dass die Austrittsöffnungen (26a-26c) nacheinander entlang des Absaugkanals (52) in diesen münden.

10. Schlauchheber (80) mit einem Hebeschlauch (82) und einer an einem Ende des Hebeschlauches (82) angeschlossenen Unterdruckhandhabungseinrichtung (14), sowie mit einer Unterdruckerzeugervorrichtung (10) nach einem der vorhergehenden Ansprüche zur Versorgung der Unterdruckhandhabungseinrichtung (14) und/oder des Hebeschlauches (82) mit Unterdruck.

## Claims

1. A vacuum generating apparatus (10) with an electrically driven primary vacuum generator (16) having a suction connection (20) for suctioning in a primary suction flow, and having at least one ejector apparatus (22), which has an inflow opening (24) that is open to the environment, an outflow opening (26), and a suction opening (28), and which can be streamed through by a suction stream from the inflow opening (24) to the outflow opening (26) which creates a suction effect at the suction opening (28), wherein the suction connection (20) of the electrically driven primary vacuum generator (16) is in flow connection with the outflow opening (26) of the ejector apparatus (22), wherein the at least one the ejector apparatus (22) is integrated into a connection element (42) of a vacuum handling apparatus (44).

2. The vacuum generating apparatus (10) according to claim 1, **characterized in that** several ejector apparatuses (22a-22c) are connected in parallel in such a way that their suction openings (28) are connected to a joint user connection (12) of the vacuum generating apparatus (10).

3. The vacuum generating apparatus (10) according to any one of the preceding claims, **characterized in that** the primary vacuum generator (16) and the ejector apparatus (22) are embodied as separate components, and the suction connection is connected by a vacuum hose (30), in particular a vacuum tube, to the outflow opening (26) of the ejector apparatus (22) .

4. The vacuum generating apparatus (10) according to the preceding claim, **characterized in that** the ejector apparatus (22) is integrated into a connection nipple (42) of a suction gripper (44).

5. The vacuum generating apparatus (10) according to any one of the preceding claims, **characterized in that** an adapter housing (64) is configured to accept the ejector apparatuses (22), said housing having on one side a primary suction connection (66) for connection with the primary vacuum generator (16) and a user connection (68, 12) arranged opposite said connection, wherein a central main suction channel (70) extends between the primary suction connection (66) and the user connection (68, 12), and wherein several ejector apparatuses (22) are arranged around the main suction channel (70), with each of the outflow openings (26) being connected to the primary suction connection (66) and each of the suction openings (28) being connected to the user connection (68, 12).

6. The vacuum generating apparatus (10) according to any one of the preceding claims, **characterized in that** a backflow valve (32) is assigned to the suction opening (28) of the ejector apparatus (22), and the backflow valve in its closed position stops the suctioning into the suction opening (28).

7. The vacuum generating apparatus (10) according to any one of the preceding claims, **characterized in that** a bypass is configured (40, 60) for a flow connection of the suction connection (20) to a user connection (12) of the vacuum generating apparatus (10) for detouring around the ejector apparatus (22), wherein a valve apparatus (37; 38, 39, 61) is configured to close the bypass (40, 60).

8. The vacuum generating apparatus (10) according to the preceding claim, **characterized in that** a pressure sensor (36') is configured to measure a vacuum present at the user connection, and that the valve apparatus (37) is embodied as a controllable valve (38) functioning in dependence on the measured values for the vacuum.

9. The vacuum generating apparatus (10) according to any one of the preceding claims, **characterized in that** several ejector apparatuses (22a-22c) are arranged in a joint ejector console (50), which has a suction channel (52) extending within the ejector console (50), which suction channel feeds into a primary connection (54) for connecting to the primary vacuum generator (16), wherein the ejector apparatuses (22a-22c) are disposed along the suction channel (52) in such a way that the outflow openings (26a-26c) feed consecutively into the suction channel (52).

10. A vacuum tube lifter (80) having a lifting tube (82) and a vacuum handling apparatus (14) attached at one end of the lifting tube (82), and having a vacuum generating apparatus (10) according to any one of the preceding claims for supplying the vacuum handling apparatus (14) and/or the lifting tube (82) with a vacuum.

## Revendications

1. Dispositif générateur de dépression (10) comprenant un générateur de dépression primaire (16) à entraînement électrique pourvu d'un raccord d'aspiration (20) destiné à aspirer un écoulement d'aspiration primaire, et au moins un dispositif éjecteur (22), lequel présente un orifice d'entrée (24) ouvert sur l'environnement, un orifice de sortie (26) et un orifice d'aspiration (28) et peut être parcouru de l'orifice d'entrée (24) à l'orifice de sortie (26) par un écoulement d'aspiration provoquant un effet d'aspiration au niveau de l'orifice d'aspiration (28), dans lequel le raccord d'aspiration (20) du générateur de dépression primaire (16) à entraînement électrique est en liaison fluidique avec l'orifice de sortie (26) du dispositif éjecteur (22), dans lequel l'au moins un dispositif éjecteur (22) est intégré dans un élément de raccordement (42) d'un dispositif de manutention à dépression (14).

2. Dispositif générateur de dépression (10) selon la revendication 1, **caractérisé en ce que** plusieurs dispositifs éjecteurs (22a-22c) sont montés en parallèle, du fait que leurs orifices d'aspiration (28) sont reliés à un raccord utile (12) commun du dispositif générateur de dépression (10).

3. Dispositif générateur de dépression (10) selon l'une quelconque des revendications précédentes, **caractérisé en ce que** le générateur de dépression primaire (16) et le dispositif éjecteur (22) sont réalisés sous la forme d'unités modulaires séparées et le raccord d'aspiration est relié à l'orifice de sortie (26) du dispositif éjecteur (22) au moyen d'une conduite à dépression (30), en particulier d'un tube à dépression.

4. Dispositif générateur de dépression (10) selon l'une quelconque des revendications précédentes, **caractérisé en ce que** le dispositif éjecteur (22) est intégré dans un mamelon de raccordement (42) d'une pince aspirante (44).

5. Dispositif générateur de dépression (10) selon l'une quelconque des revendications précédentes, **caractérisé en ce qu'**un boîtier adaptateur (64) est destiné à loger les dispositifs éjecteurs (22) et présente d'une part un raccord d'aspiration primaire (66) pour la liaison au générateur de dépression primaire (16) et un raccord utile (68, 12) agencé à l'opposé, dans lequel un canal principal d'aspiration (70) central s'étend entre le raccord d'aspiration primaire (66) et le raccord utile (68, 12), et dans lequel plusieurs dispositifs éjecteurs (22) sont agencés autour du canal principal d'aspiration (70), dans lequel respectivement les orifices de sortie (26) sont reliés au raccord d'aspiration primaire (66) et les orifices d'aspiration (28) au raccord utile (68, 12).

6. Dispositif générateur de dépression (10) selon l'une quelconque des revendications précédentes, **caractérisé en ce qu'**un clapet antiretour (32), lequel, dans sa position de fermeture, empêche une aspiration dans l'orifice d'aspiration (28), est associé à l'orifice d'aspiration (28) du dispositif éjecteur (22).

7. Dispositif générateur de dépression (10) selon l'une quelconque des revendications précédentes, **caractérisé en ce qu'**une dérivation (40, 60) est destinée à la liaison fluidique entre le raccord d'aspiration (20) et un raccord utile (12) du dispositif générateur de dépression (10) en contournant le dispositif éjecteur (22), dans lequel un ensemble soupape (37; 38, 39, 61) est destiné à fermer la dérivation (40, 60).

8. Dispositif générateur de dépression (10) selon la revendication précédente, **caractérisé en ce qu'**un capteur de pression (36') destiné à mesurer la dépression présente au niveau du raccord utile est prévu, et **en ce que** l'ensemble soupape (37) est réalisé sous la forme d'une soupape (38) pouvant être commandée en fonction des valeurs de mesure pour la dépression.

9. Dispositif générateur de dépression (10) selon l'une quelconque des revendications précédentes, **caractérisé en ce que** plusieurs dispositifs éjecteurs (22a-22c) sont agencés dans une console d'éjecteurs (50) commune, laquelle présente un canal d'aspiration (52) qui s'étend dans la console d'éjecteurs (50) et qui débouche dans un raccord primaire (54) afin d'être relié au générateur de dépression primaire (16), dans lequel les dispositifs éjecteurs (22a-22c) sont agencés le long du canal d'aspiration (52) de telle sorte que les orifices de sortie (26a-26c) débouchent les uns après les autres le long du canal d'aspiration (52) dans celui-ci.

10. Système de levage par aspiration (80) pourvu d'un tube de levage (82) et d'un dispositif de manutention à dépression (14) raccordé à une extrémité du tube de levage (82), ainsi que d'un dispositif générateur de dépression (10) selon l'une quelconque des revendications précédentes destiné à alimenter le dispositif de manutention à dépression (10) et/ou le tube de levage (82) en dépression.
